# EUROPEAN PATENT APPLICATION

(11) **EP 1 274 272 A1**
(43) Date of publication of application: **08.01.2003**
(21) Application number: 01113661.1
(22) Date of filing: 19.06.2001
(51) Int. Cl.: H04R 1/02, H04M 1/02, H04N 5/64, H04R 7/04

(54) **The application of invisible speaker and the method for fabricating the same**

(71) Applicant: Lin, Chao-Hsien, Taipei (TW); Lin, Tung-Siang, His-Tze, Taipei Shien (TW)
(72) Inventor: Lin, Chao-Hsien, Taipei (TW); Lin, Tung-Siang, His-Tze, Taipei Shien (TW)
(74) Representative: Reinhard - Skuhra - Weise & Partner

(57) **Abstract**

An invisible speaker (80, 120) applied in an electric equipment is disclosed. The invisible speaker includes a transparent device (83, 92, 102, 113, 123) disposed on a body of the electric equipment (82, 122) and having a transparent portion (831) for a vision face of the electric equipment, wherein the transparent device (83, 92, 102, 113, 123) is a distributed acoustic radiator for sending out a sound, and a first transducer (84, 91, 101, 111, 126) connected to the transparent device (83, 92, 102, 113, 123) for vibrating the transparent device (83, 92, 102, 113, 123) to send out the sound.

## Description

The present invention relates to an invisible speaker application and a method for fabricating the invisible speaker, and more particularly to an invisible speaker applied in an electric equipment and a method for fabricating the invisible speaker.

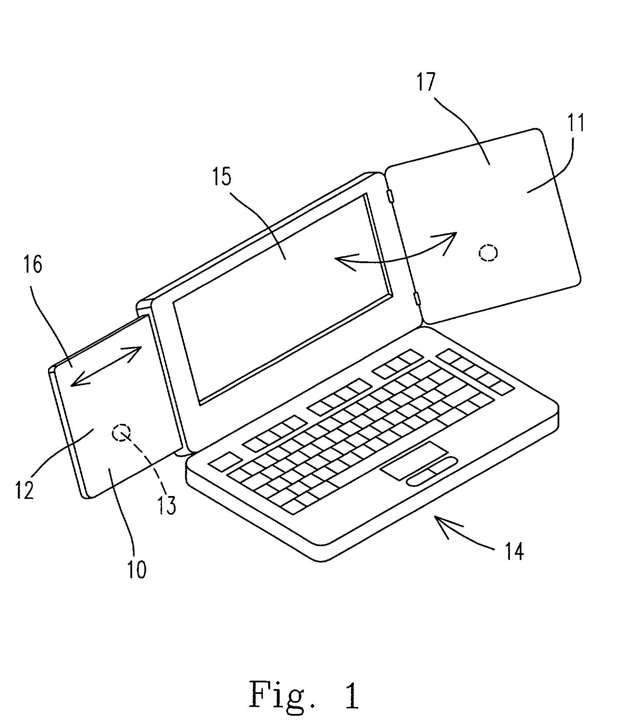

Generally, a panel-form speaker is occupies substantially large space and sends out a sound from the position where it is. Fig. 1 is a three-dimensional view illustrating a panel-form speaker applied in a notebook according to the prior art. As shown in Fig. 1, each of two panel-form speakers 10, 11 has a distributed acoustic radiator 12 and a transducer 13. Two panel-form speakers 10, 11 are connected to a liquid crystal display 15 of a notebook 14 and disposed on the opposite sides thereof. Although the panel-form speakers 10, 11 can achieve the speaker effect, they have to be unfolded from the received positions to the opened positions 16, 17. However, the panel-form speakers 10, 11 occupy too much space when they are unfolded, which results in inconvenience and inflexibility in applications.

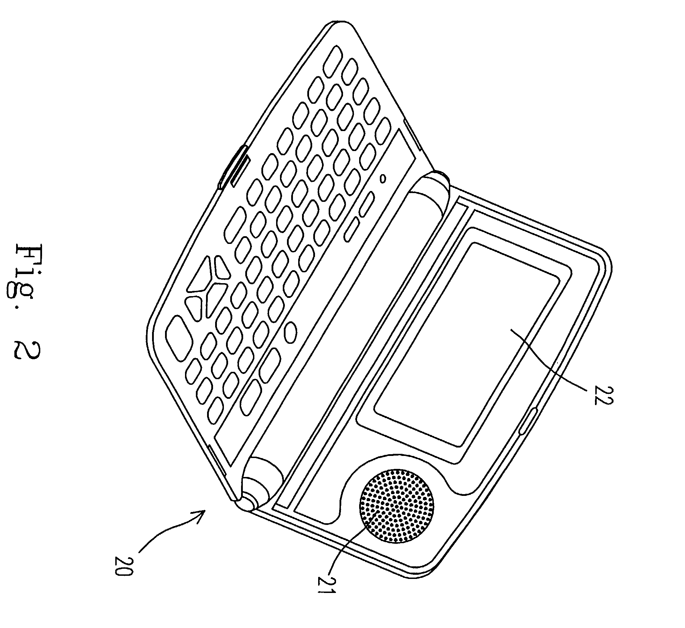

Fig. 2 is a front view illustrating a panel-form speaker applied in a personal digital assistant (PDA) according to the prior art. The personal digital assistant 20 has a speaker 21 and a display 22. Because the speaker 21 and the display 22 are separately disposed, the sound emitted from the speaker is usually unclear. If the speaker is changed to the bigger size, it will occupy too much space.

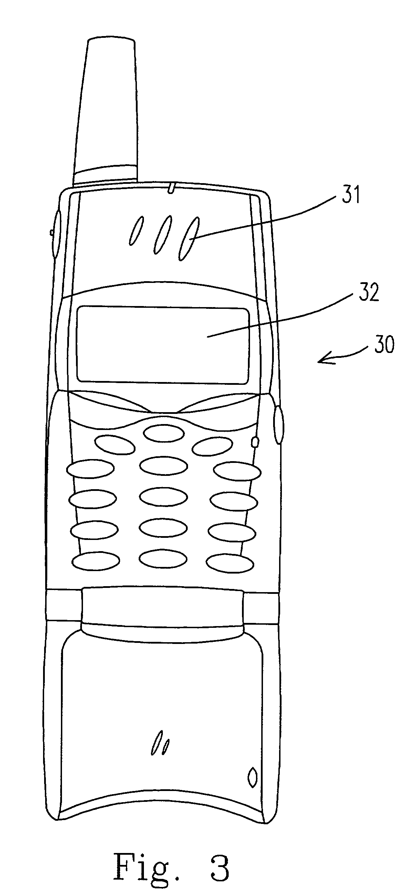

Fig. 3 is a front view illustrating a panel-form speaker applied in a mobile phone with a foldable cover according to the prior art. The mobile phone 30 with a foldable cover has a receiving speaker 31 and a display 32 which are separated. Hence, the user has to put the receiving speaker 31 closed to the ear for listening. However, for a mobile phone with a wireless application protocol function, the user has to listen from the receiving speaker and simultaneously watch the information from the display. Thus, it is troublesome because user has to move the mobile phone back and forth for listening and watching.

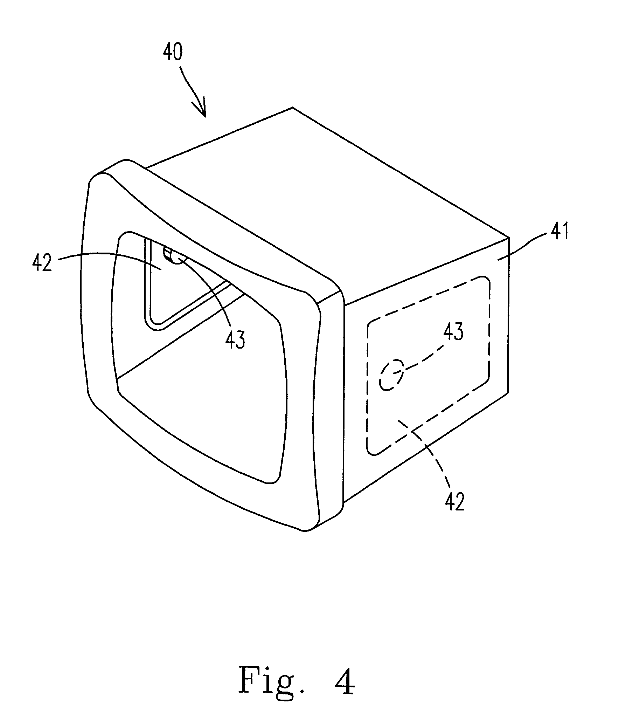

Fig. 4 is a three-dimensional view illustrating a panel-form speaker applied in a display according to the prior art. The display 40 including a shell 41 is equipped with two distributed acoustic radiators 42 and two transducers 43. When the acoustic radiators 42 vibrate air to send out a sound wave, the sound wave has to vibrate the shell 41 for sending out the sound to the user's ears. Thus, this indirect transmission way consumes more energy.

Similarly, an automatic vending machine 50 including a transducer 51, an acoustic radiator 52, and a plastic plate 53 as shown in Fig. 5, a display mounted on the back 61 of a cabin chair 60 including a transducer 62, an acoustic radiator 63, and a chair cover 64 as shown in Fig. 6, and a bulletin board 70 including a transducer 71, an acoustic radiator 72, and a plastic plate 73 as shown in Fig. 7 utilize the transducer to vibrate the acoustic radiator for further vibrating the plastic plate or the chair cover. Therefore, the sound wave is not directly transmitted.

Therefore, the purpose of the present invention is to develop an invisible speaker applied in an electric equipment to deal with the above situations encountered in the prior art.

It is therefore an object of the present invention to propose an invisible speaker applied in an electric equipment and a method for fabricating an invisible speaker for enhancing the sound efficiency.

It is therefore another object of the present invention to propose an invisible speaker applied in an electric equipment and a method for fabricating an invisible speaker for reducing space-occupied.

It is therefore an additional object of the present invention to propose an invisible speaker applied in an electric equipment and a method for fabricating an invisible speaker for conveniently listening a sound and watching an image from the front direction of users' eyes.

According to the present invention, there is proposed an invisible speaker applied in an electric equipment. The invisible speaker includes a transparent device disposed on a body of the electric equipment and having a transparent portion for a vision face of the electric equipment, wherein the transparent device is a distributed acoustic radiator for sending out a sound, and a first transducer connected to the transparent device for vibrating the transparent device to send out the sound.

Certainly, the electric equipment can be a point of sale (POS) display, a personal digital assistant (PDA), a television, or a mobile phone. The personal digital assistant preferably has a liquid crystal display and a computer dictionary. Certainly, the mobile phone can have a function of a wireless application protocol (WAP), a personal digital assistant or the combination thereof.

Preferably, the transparent device is made of a composite material for becoming a proper sounding diaphragm, and the composite material is a composite plastic. Preferably, the composite material has a thickness ranged from 0.25 to 0.35 mm. Certainly, the transparent device is further covered by an opaque material for hiding the first transducer.

Certainly, the electric equipment can be a cathode-ray tube (CRT) monitor, and the invisible speaker further includes a second transducer disposed in an opposite side of the first transducer for the transparent device and cooperated with the first transducer to produce a resonant effect. Preferably, the transparent device has a thickness of 1.0 mm.

Certainly, the electric equipment can be a display on the back of a cabin chair, a sound bulletin board, a notebook, or an automatic vending machine.

According to the present invention, there is proposed an invisible speaker applied in an electric equipment. The invisible speaker includes a transparent device additionally connected to a body of the electric equipment and located on a vision face of the electric equipment, wherein the transparent device is a distributed acoustic radiator for sending out a sound, and a first transducer connected to the transparent device for vibrating the transparent device to send out the sound.

Certainly, the electric equipment is a cathode-ray tube (CRT) monitor, and the invisible speaker further includes a second transducer disposed in an opposite side of the first transducer for the transparent device and cooperated with the first transducer to produce a resonation.

According to the present invention, there is proposed a method for fabricating an invisible speaker applied in an electric equipment. The method includes steps of providing a transparent device disposed on a body of the electric equipment and having a transparent portion for a vision surface of the electric equipment, wherein the transparent device is a distributed acoustic radiator for sending out a sound, and providing a first transducer connected to the transparent device for vibrating the transparent device to send out the sound.

Certainly, the electric equipment can be a cathode-ray tube (CRT) monitor, and the invisible speaker further includes a second transducer disposed in an opposite side of the first transducer for the transparent device and cooperated with the first transducer to produce a resonation.

The present invention may best be understood through the following description with reference to the accompanying drawings, in which:

### BRIEF DESCRIPTION OF THE DRAWINGS

Fig. 1 is a three-dimensional view illustrating a panel-form speaker applied in a notebook according to the prior art;
Fig. 2 is a front view illustrating a panel-form speaker applied in a personal digital assistant (PDA) according to the prior art;
Fig. 3 is a front view illustrating a panel-form speaker applied in a mobile phone with a foldable cover according to the prior art;
Fig. 4 is a three-dimensional view illustrating a panel-form speaker applied in a display according to the prior art;

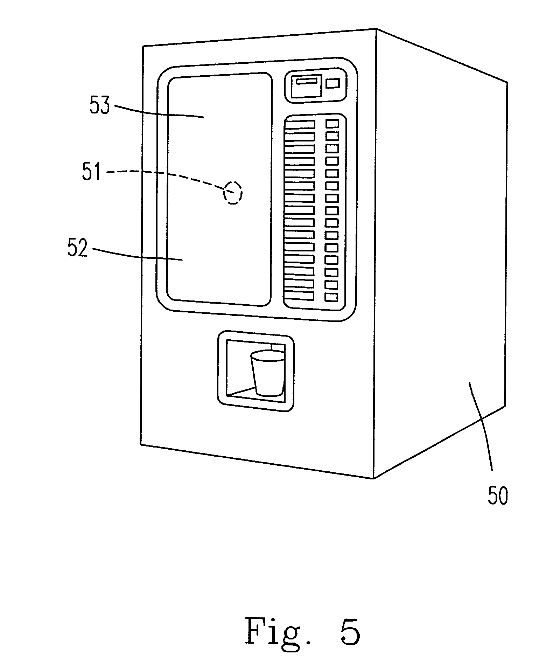

Fig. 5 is a three-dimensional view illustrating a panel-form speaker applied in an automatic vending machine according to the prior art;

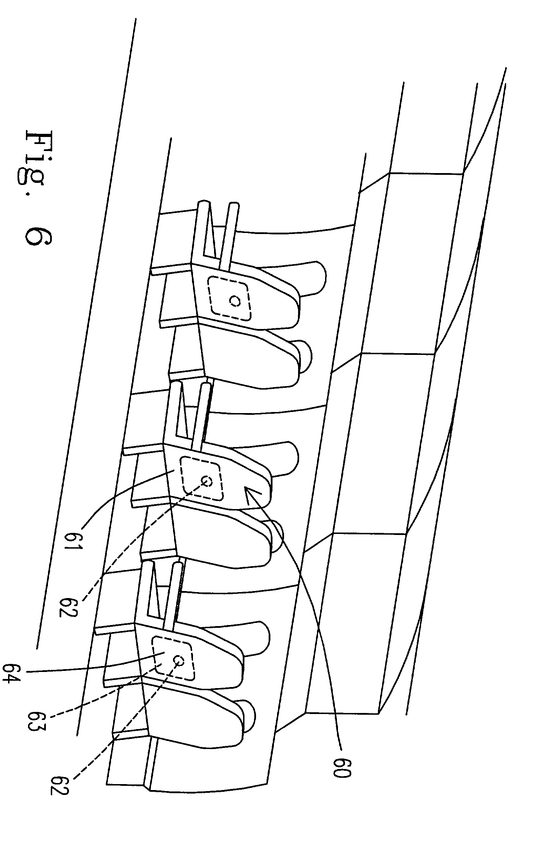

Fig. 6 is a three-dimensional view illustrating a panel-form speaker applied in a display mounted on the back of a cabin chair according to the prior art;

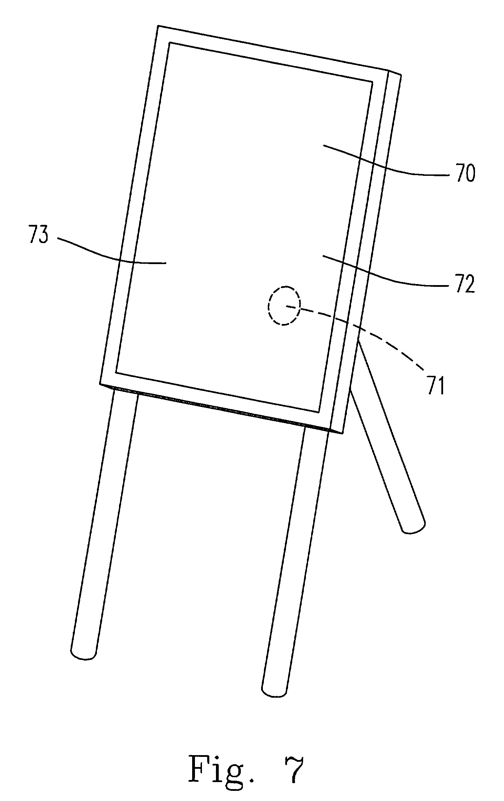

Fig. 7 is a three-dimensional view illustrating a panel-form speaker applied in a bulletin board according to the prior art;

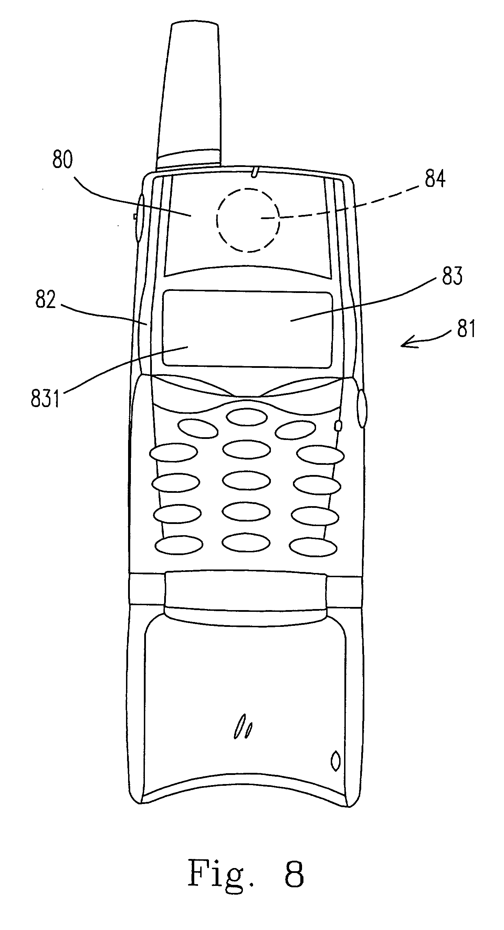

Fig. 8 is a three-dimensional view illustrating an invisible speaker applied in a mobile phone with a foldable cover according to the present invention;

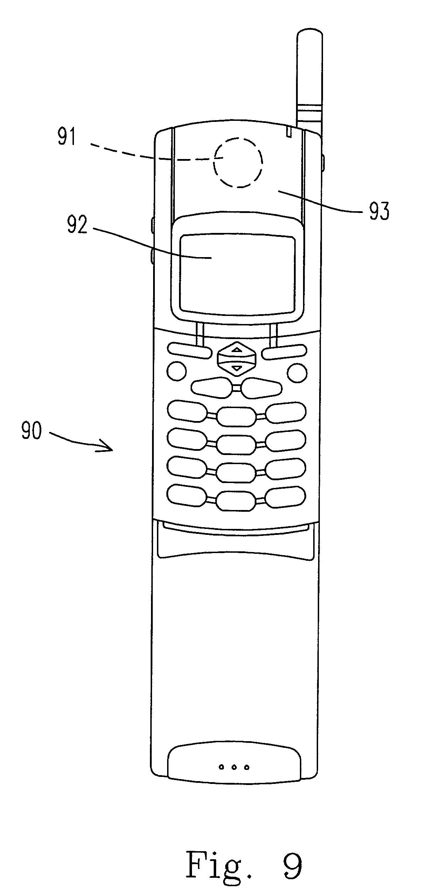

Fig. 9 is a front view illustrating an invisible speaker applied in a mobile phone with a drawing out cover according to the present invention;

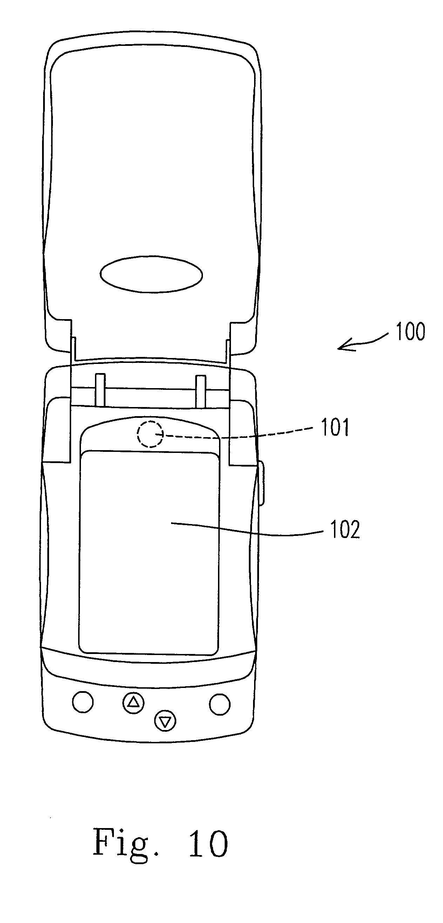

Fig. 10 is a front view illustrating an invisible speaker applied in a mobile phone with a big screen according to the present invention;

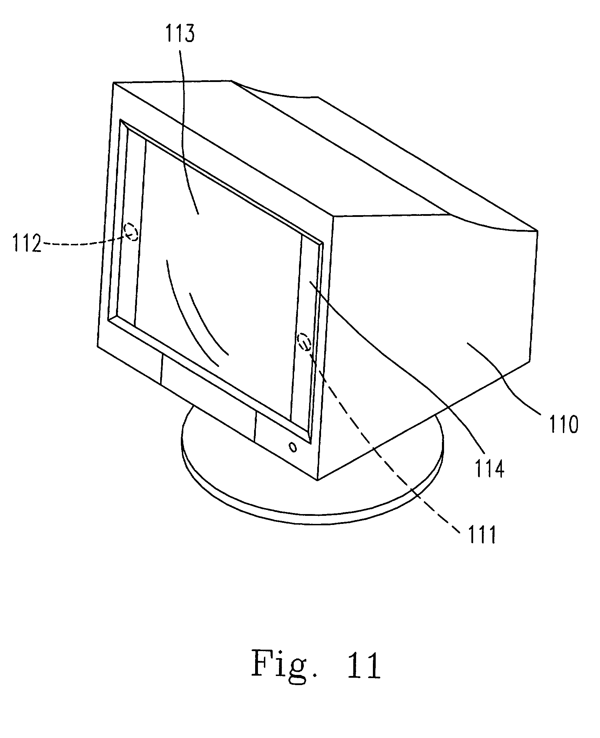

Fig. 11 is a three-dimensional view illustrating an invisible speaker applied in a monitor to a preferred embodiment of the present invention; and

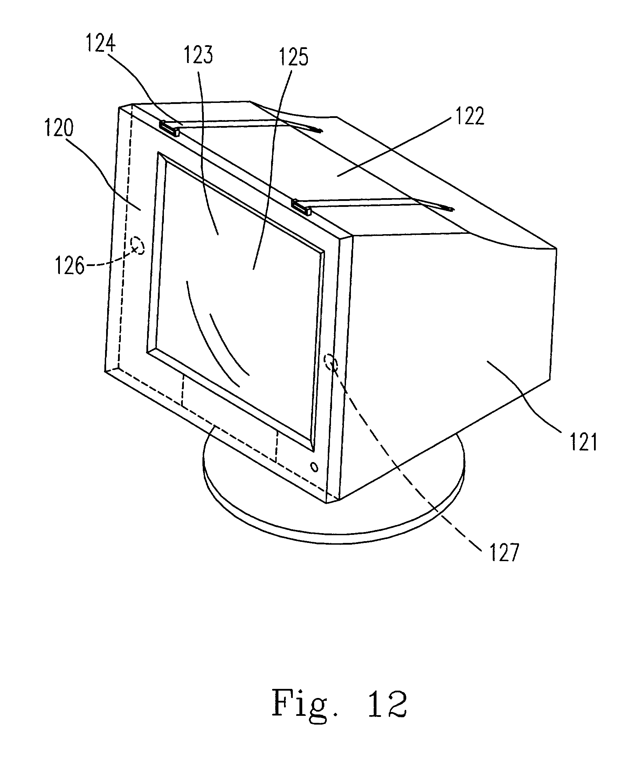

Fig. 12 is a three-dimensional view illustrating an invisible speaker applied in a monitor according to another embodiment of the present invention.

As shown in Fig. 8, an invisible speaker 80 is applied in a mobile phone 81 with a foldable cover. The invisible speaker 80 applied in an electric equipment, i.e. mobile phone 81, includes a transparent device 83 disposed on a body of the electric equipment 82, and a first transducer 84, i.e. exciter, connected to the transparent device 83 for vibrating the transparent device 83 to send out a sound. The transparent device has a transparent portion 831 for a vision face of the mobile phone 81, and is a distributed acoustic radiator for sending out the sound.

Because the transparent device 83 includes a built-in device of the first transducer 84 as shown in Fig. 8, the mobile phone 30 as shown in Fig. 3 has to be adjusted the size of shell. In addition, the surface area of the transparent device 83 is bigger than that of the monitor 32, so for obtaining better sound effect and directly hearing from the front of users' eyes, the magnet inside the first transducer 84 needs to be bigger than that of the prior art. However, the power-consumption will not be increased.

As shown in Fig. 9, an invisible speaker is applied in a mobile phone 90 with a drawing out cover. The invisible speaker includes a first transducer 91 and a transparent device 92 for enhancing sound efficiency. The transparent device 92 is made of a composite material and is a feasible sounding diaphragm. In addition, the transparent device 92 is further covered by an opaque material 93 such as a colored glass as shown in Fig. 9 for hiding the first transducer 91. The composite material has a thickness ranged from 0.25 to 0.35 mm.

As shown in Fig. 10, an invisible speaker is applied in a mobile phone 100 with a big screen. The mobile phone also has a wireless application protocol (WAP) and a personal digital assistant (PDA) functions. A first transducer 101 and a transparent device 102 are used for enhancing the sound efficiency.

As shown in Fig. 11, an invisible speaker, applied in a cathode-ray tube (CRT) monitor 110, includes a first transducer 111, a second transducer 112, and a transparent device 113. The first transducer 111 and a second transducer 112 are disposed in opposite sides of the transparent device 113 for generating a resonant effect. The transparent device 113 is further covered by an opaque material such as colored glass 114 as shown in Fig. 11 for hiding the first transducer 111 and the second transducer 112. Furthermore, the transparent device 113 has a thickness of 1.0 mm.

As shown in Fig. 12, an invisible speaker 120 which is applied in an electric equipment, includes a first transducer 126, a second transducer 127 and a transparent device 123. The electric equipment 122 has a monitor 121 which is a cathode-ray tube display. The transparent device 123 is connected to a body of the electric equipment 122 by hanging and is located on a vision face 125 of the electric equipment. The transparent device is also a distributed acoustic radiator for sending out a sound. The first transducer 126 is connected to the transparent device 123 for vibrating the transparent device 123 to send out the sound. The first transducer 126 and the second transducer 127 are disposed in an opposite sides of the transparent device 123 for generating a resonant effect.

Similarly, the invisible speaker is applied in a point of sale display, a personal digital assistant, and a computer dictionary.

In addition, when an invisible speaker according to the present invention is applied in a display mounted on the back of the cabin chair, an acoustic radiator is replaced by a transparent device driven by a first transducer. Thus, a sound wave is directly transmitted instead of vibrating the chair cover. Similarly, when an invisible speaker according to the present invention is applied in a sound bulletin board or an automatic vending machine, a sound wave is more directly and quickly transmitted to avoid vibrating the plastic cover. Furthermore, when an invisible speaker according to the present invention is applied in a notebook, the space for two panel-form speakers can be highly saved.

In sum, the invisible speaker according to the present invention can enhance a sound efficiency and reduce the occupied space.

## Claims

1. An invisible speaker (80, 120) applied in an electric equipment, comprising:
a transparent device (83, 92, 102, 113, 123) disposed on a body of the electric equipment (82, 122) and having a transparent portion (831) for a vision face of the electric equipment, wherein the transparent device (83, 92, 102, 113, 123) is a distributed acoustic radiator for sending out a sound; and
a first transducer (84, 91, 101, 111, 126) connected to the transparent device (83, 92, 102, 113, 123) for vibrating the transparent device (83, 92, 102, 113, 123) to send out the sound.

2. The invisible speaker according to claim 1, **characterized in that** the electric equipment is selected from one group consisting of a point of sale (POS) display, a personal digital assistant (PDA), a television, and a mobile phone (81, 90, 100).

3. The invisible speaker according to claim 2, **characterized in that** the personal digital assistant has a liquid crystal display and a computer dictionary.

4. The invisible speaker according to claim 2, **characterized in that** the mobile phone (81, 90, 100) has a function which is one selected from a group consisting of a wireless application protocol (WAP), a personal digital assistant and the combination thereof.

5. The invisible speaker according to claim 2, **characterized in that** the transparent device (83, 92, 102, 113, 123) is made of a composite material for becoming a proper sounding diaphragm.

6. The invisible speaker according to claim 5, **characterized in that** the composite material is a composite plastic.

7. The invisible speaker according to claim 5, **characterized in that** the composite material has a thickness ranged from 0.25 to 0.35 mm.

8. The invisible speaker according to claim 5, **characterized in that** the transparent device (92, 113) is further covered by an opaque material (93, 114) for hiding the first transducer (91, 111).

9. The invisible speaker according to claim 1, **characterized in that** the electric equipment is a cathode-ray tube (CRT) monitor (110, 121), and the invisible speaker further comprises a second transducer (112, 127) disposed in an opposite side of the first transducer (111, 126) for the transparent device (113, 123) and cooperated with the first transducer (111, 126) to produce a resonant effect.

10. The invisible speaker according to claim 9, **characterized in that** the transparent device (113, 123) has a thickness of 1.0 mm.

11. The invisible speaker according to claim 1, **characterized in that** the electric equipment is selected from one group consisting of a display on the back of a cabin chair, a sound bulletin board, a notebook, and an automatic vending machine.

12. An invisible speaker applied in an electric equipment, comprising:
a transparent device (83, 92, 102, 113, 123) additionally connected to a body of the electric equipment (82, 122) and located on a vision face of the electric equipment, wherein the transparent device (83, 92, 102, 113, 123) is a distributed acoustic radiator for sending out a sound; and
a first transducer (84, 91, 101, 111, 126) connected to the transparent device (83, 92, 102, 113, 123) for vibrating the transparent device (83, 92, 102, 113, 123) to send out the sound.

13. The invisible speaker according to claim 12, **characterized in that** the electric equipment is a cathode-ray tube (CRT) monitor (110, 121), and the invisible speaker further comprises a second transducer (112, 127) disposed in an opposite side of the first transducer (111, 126) for the transparent device (113, 123) and cooperated with the first transducer (111, 126) to produce a resonant effect.

14. A method for fabricating an invisible speaker (80, 120) applied in an electric equipment (82, 122), comprising steps of:
providing a transparent device (83, 92, 102, 113, 123) disposed on a body of the electric equipment (82, 122) and having a transparent portion (831) for a vision surface of the electric equipment, wherein the transparent device (83, 92, 102, 113, 123) is a distributed acoustic radiator for sending out a sound; and
providing a first transducer (84, 91, 101, 111, 126) connected to the transparent device (83, 92, 102, 113, 123) for vibrating the transparent device (83, 92, 102, 113, 123) to send out the sound.

15. The method according to claim 14, **characterized in that** the electric equipment is a cathode-ray tube (CRT) monitor (110, 121), and the invisible speaker further comprises a second transducer (112, 127) disposed in an opposite side of the first transducer (111, 126) for the transparent device (113, 123) and cooperated with the first transducer (111, 126) to produce a resonant effect.
